# EUROPÄISCHE PATENTSCHRIFT

(11) **EP 3 502 174 B1**
(45) Veröffentlichungstag und Bekanntmachung des Hinweises auf die Patenterteilung: **04.03.2020**
(21) Anmeldenummer: 17209980.6
(22) Anmeldetag: 22.12.2017
(51) Int. Cl.: C08K 3/22, C08L 77/06

(54) **WÄRMELEITFÄHIGE POLYAMID-FORMMASSEN**
HEAT-CONDUCTIVE POLYAMIDE MOULDING MASSES
MATIÈRE MOULABLE DE POLYAMIDE THERMOCONDUCTRICE

(43) Veröffentlichungstag der Anmeldung: 26.06.2019
(73) Patentinhaber: EMS-Patent AG, 7013 Domat/Ems (CH)
(72) Erfinder: STÖPPELMANN, Georg, 7402 Bonaduz (CH)
(74) Vertreter: Bremi, Tobias Hans

(56) Entgegenhaltungen:
- US-A1- 2014 252 265
- US-A1- 2017 137 622

## Beschreibung

### TECHNISCHES GEBIET

Die vorliegende Erfindung betrifft thermoplastische Polyamid-Formmassen, enthaltend wärmeleitfähige Füllstoffe, die sich durch eine hohe Zähigkeit, insbesondere hohe Bruchdehnung auszeichnen. Weiterhin betrifft die Erfindung die Verwendung der erfindungsgemässen Formmassen zur Herstellung von Folien und Formkörpern jeglicher Art, sowie die hierbei erhältlichen Formkörper und deren Verwendungen.

### STAND DER TECHNIK

Aufgrund ihrer hervorragenden mechanischen Eigenschaften werden technische Kunststoffe in einem breiten Anwendungsbereich wie für Automobilteile, Elektro- und elektronische Teile, Maschinenteile und dergleichen verwendet. Aufgrund der hohen Designfreiheit und der tiefen Kosten konnten Kunststoffformmassen bereits Metalle in vielen dieser Anwendungen ersetzen.

Viele dieser Anwendungen erfordern, dass die Kunststoffteile in der Nähe von oder sogar in Kontakt mit Wärmequellen stehen, wie z.B. bei Anwendungen in Motoren oder Lichtquellen.

Es ist daher wünschenswert, dass diese Teile aus Materialien gefertigt werden, die ausreichend wärmeleitend sind, um die erzeugte Wärme abzuführen. Metallteile sind zwar wärmeleitend, aber auch gleichzeitig elektrisch leitfähig, was nun gerade in bestimmten Fällen unerwünscht sein kann. Polyamidformmassen sind im Allgemeinen thermisch und elektrisch isolierend, es sei denn, sie enthalten grosse Mengen an elektrisch leitfähigen Additiven. So ist für viele Anwendungen ein wärmeleitender, elektrisch dagegen isolierender Werkstoff wünschenswert, der Metalle ersetzen kann.

Es ist bekannt, dass sich die Wärmeleitfähigkeit von Polymeren durch den Zusatz mineralischer oder metallischer Füllstoffe erhöhen lässt. Um allerdings nennenswerte Effekte zu erzielen, ist der Zusatz von grossen Mengen Füllstoff erforderlich, was sich nachteilig auf die Verarbeitbarkeit der Formmassen und die mechanischen Eigenschaften und die Oberflächenqualität der daraus erhältlichen Formkörper auswirkt. Ein Zusatz von z.B. Bornitrid oder Talk sorgt zwar für eine hohe Wärmeleitfähigkeit der Formmasse, die Schlagzähigkeit und die Reissdehnung werden jedoch dramatisch verschlechtert.

WO-A-2007/113116 beschreibt wärmeleitfähige Polyamide, die neben einer verbesserten Wärmeleitfähigkeit gute mechanische Eigenschaften aufweisen sollen. Die gearbeiteten Beispiele beruhen alle auf Polyamid PA66 und weisen für Aluminiumoxid-Gehalte im Bereich von 55 - 85 Gew.-% Bruchdehnungen im Bereich von 5.1 bis 0.8 % auf.

WO-A-2006/135840 und WO-A-2012/044903 beschreiben wärmeleitfähige Formmassen auf Basis von teilaromatischen Polyamiden und wärmeleitfähigen Zusätzen, u.a. Graphit, Bornitrid, Calciumfluorid, Magnesiumhydroxid und Aluminiumoxid. Die erzielte Bruchdehnung und Schlagzähigkeit ist auf tiefem Niveau.

US-A-2014/0252265 betrifft flammgeschützte, wärmeleitfähige thermoplastische Formmassen. Obwohl der Füllgrad betreffend die wärmeleitfähigen Zusätze lediglich 40 bis 49 Gew.-% beträgt, weisen die Formmassen äusserst geringe Bruchdehnungen von 0.95 bis 1.13 % auf.

Die in EP-A-3004227 beschriebenen wärmeleitfähigen, thermoplastischen Formmassen, experimentell nachgewiesen auf Grundlage der Polyamide PA66 und PA1010 besitzen eine niedrige Bruchdehnung von weniger als 3.1 %, obwohl die Konzentration der wärmeleitfähigen Füllstoffe bei 30 Gew.-% liegt.

### DARSTELLUNG DER ERFINDUNG

Der vorliegenden Erfindung liegt u.a. die Aufgabe zugrunde, gut verarbeitbare Formmassen bereitzustellen, die zu Formkörpern mit guter thermischer Leitfähigkeit und sehr guten mechanischen Eigenschaften, insbesondere einer hohen Bruchdehnung und einer hohen Schlagzähigkeit verarbeitet werden können. Eine gute Verarbeitbarkeit im Sinne der vorliegenden Erfindung ist vorzugsweise dann erreicht, wenn die Formmassen eine ausreichende Fliesslänge (typischerweise im Bereich von mindestens 12 Zentimeter bei einem Füllgrad von 80 Gew.-%) aufweisen, und die daraus hergestellten Formteile eine niedrige Oberflächenrauhigkeit (Ra, Rz) aufweisen. Sehr gute Mechanik liegt dann vor, wenn die Formmassen bei guter Festigkeit und hohem E-Modul eine sehr hohe Bruchdehnung, insbesondere von wenigstens 8% gemäss ISO 527 (2012), vorzugsweise wenigstens 10 oder 15 %, und eine Schlagzähigkeit gemäss ISO 179/2^{∗}eU (1997, instrumentiert) von wenigstens 50 kJ/m² aufweisen.

Konkret betrifft die vorliegende Erfindung eine thermoplastische Polyamid-Formmasse, enthaltend oder bestehend aus den folgenden Komponenten:
(A) 15 bis 45 Gew.-% wenigstens eines aliphatischen Polyamides mit einem C zu N-Verhältnis von mindestens 10;
(B) 55 bis 85 Gew.-% wenigstens eines thermisch leitfähigen Metalloxids ausgewählt aus der folgenden Gruppe: Aluminiumoxid, Magnesiumoxid, Zinkoxid, Alumosilikat, Zirkonoxid, oder Mischungen davon;
(C) 0 bis 5 Gew.-% Additive;
wobei die Summe der Gewichtsprozente (A) bis (C) 100 % ergibt.

Der Anteil von **Komponente (A)** liegt vorzugsweise im Bereich von 18 bis 40 Gew.-% oder 18 bis 39.99 Gew.-% und bevorzugt im Bereich von 19 bis 36 Gew.-% oder 19 bis 35.9 Gew.-% und insbesondere im Bereich von 20-35 Gew.% oder 22 bis 32 Gew.-%.

Weiterhin gilt für die Komponente (A) respektive das mindestens eine aliphatische Polyamid dieser Komponente (A), dass vorzugsweise ein C/N-Verhältnis von mindestens 10.5, oder im Bereich von 10 bis 12 und insbesondere bevorzugt im Bereich von 10.5 bis 11.5 vorliegt.

Dabei ergibt sich das C/N-Verhältnis der jeweiligen Polyamid-Einheiten aus der Summe der Kohlenstoffatome (C) der die Polyamid-Einheiten aufbauenden Monomere, also den Dicarbonsäuren, Diaminen sowie Lactamen und Aminocarbonsäuren, in Bezug auf die Summe der Stickstoffatome (N) in diesen Monomeren, die im Polyamid zu Amidbindungen reagieren können. Enthält ein Polyamid mehrere Polyamideinheiten, wie beispielsweise PA 11/913 (30:70 mol-%), das die PA-Einheiten "11" und "913" umfasst, so werden die C/N-Verhältnisse der einzelnen PA-Einheiten gemäss ihrem Molanteil im Polyamid gewichtet. Für das Beispiel PA 11/913 (30:70 mol-%) resultiert somit ein C/N-Verhältnis von (0.3 ^{∗} 11) + 0.7 ^{∗} (9 + 13) / 2 = 11.

Die aliphatischen Polyamide der Komponente (A) beruhen bevorzugt auf linearen, unverzweigten aliphatischen Diaminen und linearen, unverzweigten aliphatischen Dicarbonsäuren bzw. Aminocarbonsäuren oder Lactamen.

Als Dicarbonsäuren sind Alkandicarbonsäuren mit 6 bis 18, insbesondere 9 bis 16 Kohlenstoffatomen einsetzbar. Als Diamine eignen sich bevorzugt Alkandiamine mit 4 bis 18, insbesondere 5 bis 12 Kohlenstoffatomen. Geeignete Lactame oder Aminocarbonsäuren haben bevorzugt 6 bis 12 Kohlenstoffatome.

Gemäss einer anderen bevorzugten Ausführungsform ist das Diamin ausgewählt aus der Gruppe bestehend aus 1,4-Butandiamin, 1,5-Pentandiamin, 2-Methyl-1,5-pentandiamin, Hexandiamin, insbesondere 1,6-Hexandiamin, 2,2,4-Trimethyl-1,6-hexamethylendiamin, 2,4,4-Trimethyl-1,6-hexamethylendiamin, Nonandiamin, insbesondere 1,9-Nonandiamin, 2-Methyl-1,8-octandiamin, 1,10-Decandiamin, 1,11-Undecandiamin, 1,12-Dodecandiamin, 1,13-Tridecandiamin, 1,14-Tetradecandiamin, 1,16-Hexadecandiamin, 1,18-Octadecandiamin, und Mischungen daraus. Besondere bevorzugt sind die offenkettigen, aliphatischen Diamine ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon.

Eine weitere bevorzugte Ausführungsform der vorliegenden Erfindung sieht vor, dass die aliphatische Dicarbonsäure ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Octadecandisäure, und Mischungen daraus. Besonders bevorzugt sind die offenkettigen, aliphatischen Dicarbonsäuren ausgewählt aus der Gruppe bestehend aus Dicarbonsäuren mit 10 bis 16 Kohlenstoffatomen, insbesondere 1,10-Decandisäure, 1,11-Undecandisäure, 1,12-Dodecandisäure, 1,13-Tridecandisäure, 1,14-Tetradecandisäure, 1,15-Pentadecandisäure, 1,16-Hexadecandisäure, 1,17-Heptadecandisäure, 1,18-Oktadecandisäure und Mischungen hiervon.

Nach einer weiteren bevorzugten Ausführungsform der vorliegenden Erfindung ist das Lactam und/oder die α,ω-Aminocarbonsäuren ausgewählt aus der Gruppe bestehend aus Caprolactam (CL), α,ω-Aminocapronsäure, α,ω-Aminoheptansäure, Capryllactam, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA), besonderes bevorzugt sind Caprolactam, α,ω-Aminocapronsäure, Laurinlactam, α,ω-Aminoundecansäure und α,ω-Aminododecansäure und Mischungen daraus. Insbesondere bevorzugt sind die Lactame und/oder Aminocarbonsäuren ausgewählt aus der Gruppe bestehend aus α,ω-Aminoundecansäure, Laurinlactam und α,ω-Aminododecansäure und Mischungen hiervon. Als Komponente (A) können folgende aliphatische Polyamide eingesetzt werden: PA10, PA11, PA12, PA515, PA516, PA517, PA518, PA614, PA615, PA616, PA617, PA618, PA713, PA714, PA715, PA716, PA717, PA718, PA812, PA813, PA814, PA815, PA816, PA817, PA818, PA911, PA912, PA913, PA914, PA915, PA916, PA917, PA918, PA1010, PA1011, PA1012, PA1013, PA1014, PA1015, PA1016, PA1017, PA1018, PA119, PA1110, PA1111, PA1112, PA1113, PA1114, PA1115, PA1116, PA1117, PA1118, PA128, PA129, PA1210, PA1211, PA1212, PA1213, PA1214, PA1215, PA1216, PA1217, PA1218, PA137, PA138, PA139, PA1310, PA1311, PA1312, PA1313, PA1314, PA1315, PA1316, PA1317, PA1318, PA146, PA147, PA148, PA149, PA1410, PA1411, PA1412, PA1413, PA1414, PA1415, PA1416, PA1417, PA1418.

Besonders bevorzugt ist das aliphatische Polyamid der Komponente (A) ausgewählt aus folgender Gruppe: PA11, PA12, PA912, PA914, PA916, PA918, PA1010, PA1012, PA1212, PA1014, PA1016, PA1018, PA614, PA516, PA616, PA618 oder Mischungen davon, vorzugsweise ausgewählt aus der Gruppe: Polyamid 12, Polyamid 516, Polyamid 616 oder Mischungen davon.

Weiterhin ist bevorzugt, wenn das aliphatische Polyamid der Komponente (A) eine relative Viskosität (nach ISO 307 bei 20 °C, 0.5 g in 100 ml m-Kresol) im Bereich von 1.5-2.4, vorzugsweise im Bereich von 1.6-2.1, insbesondere bevorzugt im Bereich von 1.65-1.95 aufweist.

Das aliphatische Polyamid der Komponente (A) hat zudem bevorzugtermassen einen Schmelzpunkt im Bereich von 170-220 °C, vorzugsweise im Bereich von 175-210 °C.

Weiterhin sind Polyamide, die durch Copolymerisation/Cokondensation zweier oder mehrerer oben genannter Polyamideinheiten erhältlich sind, oder Mischungen mehrerer Polyamide geeignet, solange ein C/N-Verhältnis von mindestens 10, bevorzugt von mindestens 10.5 und insbesondere bevorzugt im Bereich von 10.5 bis 11.5 eingehalten wird. Die thermoplastischen Formmassen enthalten als **Komponente (B)** bevorzugt 60 bis 85 Gew.-% eines thermisch leitfähigen Metalloxid, beispielsweise eines Aluminiumoxids oder Magnesiumoxids oder Zinkoxids oder Alumosilikats oder Mischungen davon. Bevorzugt beträgt der Anteil der Komponente (B) in den erfindungsgemässen Formmassen 65 bis 80 und insbesondere 67 bis 77 Gew.-%. Alumosilikate sind Minerale und chemische Verbindungen aus der Gruppe der Silicate, die sich aus den Grundbausteinen SiO₄-Tetraeder und AlO₄-Tetraeder aufbauen. Bevorzugt werden Alumosilikate mit einem Gehalt an Aluminiumoxid von 50-60 Gew.-% und an Siliciumdioxid von 38 bis 48 Gew.-%, typischerweise von 55 Gew.-% Aluminiumoxid und 43 Gew.-% Siliciumdioxid, 0.1 bis 1% an Titandioxid, Eisenoxid, Calciumoxid, Magnesiumoxid und Alkalioxiden. Möglich sind z.B. Alumosilikate mit einer Dichte von 3-5 g/cm³, z.B. 3,65 g/cm³, und/oder einer Teilchengössen von D50 = 1-30 µm, vorzugsweise im Bereich von 5-25 µm. Bevorzugte Alumosilikate sind z.B. Silatherm 1360-010, 1360-012, 1360-100 und 1360-400. Die Alumosilikate können oberflächenbehandelt sein, insbesondere mit Aminosilanen, Epoxysilanen und Metharylsilanen.

Generell gilt, dass der Anteil von Komponente (B) im Bereich von 60-82 Gew.-%, bevorzugt im Bereich von 64-81 Gew.-%, und insbesondere im Bereich von 65-80 Gew.-% oder 68-78 Gew.-% liegt.

Das thermisch leitfähige Metalloxid der Komponente (B) kann bevorzugt ausgewählt sein als Aluminiumoxid, Alumosilikat (Aluminiumsilikat), Zinkoxid, oder eine Mischung davon. Besonders bevorzugt ist es, wenn Komponente (B) im Wesentlichen aus Partikeln aus α-Aluminiumoxid besteht. Häufig werden Mischungen aus Aluminiumoxid und α-Aluminiumoxid eingesetzt, wobei der Anteil an letzterem wenigstens 90 %, bevorzugt wenigstens 95 % in der Mischung der Aluminiumoxide ausmachen.

Geeignete Metalloxide der Komponente (B) weisen vorzugsweise ein Aspektverhältnis kleiner 10, bevorzugt kleiner 7,5 und insbesondere kleiner 5 auf.

Der bevorzugte mittlere Partikeldurchmesser (d50) beträgt von 0,2 bis 25 µm, vorzugsweise von 0,3 bis 15 µm und insbesondere von 0,35 bis 10 µm, bestimmt mit einem Partikelgrössenanalysator Cilas 1064 gemäss Lasergranulometrie nach ISO 13320 EN (2009). Derartige Produkte sind beispielsweise von der Firma Martinswerk (Aluminiumoxide) oder Quarzwerke GmbH (Alumosilikate) im Handel erhältlich.

Das thermisch leitfähige Metalloxid der Komponente (B) verfügt mit anderen Worten bevorzugtermassen über eine mittlere Teilchengrösse (Median, d50) im Bereich von 0.2-40 µm oder 0.5-20 µm, vorzugsweise im Bereich von 1-5 µm, insbesondere bevorzugt im Bereich von 1.5-3 µm.

Weiter bevorzugtermassen verfügt das thermisch leitfähige Metalloxid der Komponente (B) über eine Teilchengrössenverteilung, sodass d100 höchstens 1000 µm, vorzugsweise höchstens 100 µm oder höchstens 60 µm, insbesondere vorzugsweise höchstens 50 µm beträgt.

Bevorzugte Oxide weisen eine BET-Oberfläche nach DIN 66131 von kleiner/gleich 15 m2/g, bevorzugt kleiner/gleich 10 m2/g auf.

Das thermisch leitfähige Metalloxid der Komponente (B) hat mit anderen Worten bevorzugt eine spezifische Oberfläche (BET) im Bereich von 0.1-10 m²/g, vorzugsweise im Bereich von 0.5-7 m²/g, insbesondere vorzugsweise im Bereich von 1.5-4 m²/g.

Das thermisch leitfähige Metalloxid der Komponente (B) kann eine Oberflächenbeschichtung aufweisen, die die Anbindung der Metalloxidpartikel an die thermoplastische Matrix verbessern sollen. Diese kann ausgewählt sein als Oberflächenbeschichtung auf Basis von Fettsäuren, Silanen, organischen Titanaten, organischen Zirkonaten, wasserlöslichen Polyamiden oder Kombinationen davon, wobei die Silane bevorzugtermassen ausgewählt sind als Alkylsilane, Aminosilane, Vinylsilane, Epoxysilane.

Als Komponenten (C) können die erfindungsgemässen Formmassen 0 bis 5 Gew.-%, vorzugsweise bis zu 0.1 bis 3.0 Gew.-%, insbesondere 0.2 bis 2.0 Gew.-% weiterer Zusatzstoffe enthalten.

Der Anteil von Komponente (C) liegt mit anderen Worten vorzugsweise im Bereich von 0.01-3 Gew.-%, vorzugsweise im Bereich von 0.1-2.0 Gew.-%, und insbesondere bevorzugt im Bereich von 0.2-1.5 Gew.-%.

Die Additive der Komponente (C) sind bevorzugtermassen ausgewählt aus der folgenden Gruppe: Verarbeitungshilfsmittel, Schmiermittel, Stabilisatoren, Pigmente, Farbstoffe, Gleitmittel, Entformungsmittel, Weichmacher, Keimbildungsmittel, Oxidationsverzögerer, UV-Stabilisatoren oder einer Mischung davon.

Gemäss einer 1. bevorzugten Ausführungsform hinsichtlich Komponente (C) umfassen die Additive der Komponente (C) wenigstens ein Schmiermittel, ausgewählt als Aluminium, Alkali oder Erdalkali Salze oder Ester oder Amide von Fettsäuren, vorzugsweise mit 10-44 Kohlenstoffatomen, oder Mischungen davon.

Als Komponente (C) können die erfindungsgemässen Formmassen insbesondere 0 bis 2, bevorzugt 0.05 bis 2.0, vorzugsweise 0.1 bis 1.5 und insbesondere 0.1 bis 1.0 Gew.-% eines Schmiermittels enthalten (jeweils bezogen auf die Gesamtheit der Formmasse, d. h. auf die Summe von (A)-(C)). Hierbei bevorzugt sind Al-, Alkali-, Erdalkalisalze oder Ester öder Amide von Fettsäuren mit 10 bis 44 C-Atomen, vorzugsweise mit 14 bis 44 C-Atomen, wobei die Metallionen Na, Mg, Ca und Al bevorzugt und Ca oder Mg besonders bevorzugt sind. Bevorzugte Metallsalze sind Ca-Stearat und Ca-Montanat sowie Al-Stearat. Die Fettsäuren können können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt. Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind. Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Die Additive der Komponente (C) können zusätzlich oder alternativ wenigstens einen Wärmestabilisator umfassen, ausgewählt aus Verbindungen des ein- oder zweiwertigen Kupfers, Stabilisatoren auf Basis sekundärer aromatischer Amine, Stabilisatoren auf Basis sterisch gehinderter Phenole, Phosphite/Phosphonite, oder Mischungen davon.

Als Komponente (C) enthalten die erfindungsgemässen thermoplastischen Formmassen weiterhin vorzugsweise 0 bis 3 Gew.-%, bevorzugt 0,02 bis 2.0 Gew.-%, besonders bevorzugt 0.1 bis 1.5 Gew.-% mindestens eines Wärmestabilisators (wiederum jeweils bezogen auf die Gesamtmasse, d. h. auf die Summe von (A)-(C)).

In einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0.005 bis 0.5, insbesondere 0.006 bis 0.3 und besonders bevorzugt 0.01 bis 0.25 Gew.-%, bezogen auf die Summe der Komponenten (A) bis (C).
   Die Kupferverbindungen sind handelsüblich bzw. ihre Herstellung ist dem Fachmann bekannt. Die Kupferverbindung kann als solche oder in Form von Konzentraten (Masterbatch) eingesetzt werden. Unter Konzentrat ist dabei ein Polymer, vorzugsweise gleicher chemischer Natur wie Komponente (A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie NaI, KI, NaBr, KBr, eingesetzt, wobei das molare Verhältnis von Metallhalogenid zu Kupferhalogenid 0.5 bis 20, bevorzugt 1 bis 10 und besonders bevorzugt 3 bis 7 beträgt.
- Stabilisatoren auf Basis sekundärer aromatischer Amine, wobei diese Stabilisatoren vorzugsweise in einer Menge von 0.2 bis 2, bevorzugt von 0.2 bis 1.5 Gew.-% vorliegen,
- Stabilisatoren auf Basis sterisch gehinderter Phenole, wobei diese Stabilisatoren vorzugsweise in einer Menge von 0.1 bis 1.5, bevorzugt von 0.2 bis 1.0 Gew.-% vorliegen, und
- Phosphiten und Phosphoniten, sowie
- Mischungen der vorstehend genannten Stabilisatoren.

Besonders bevorzugte Beispiele für erfindungsgemäss einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendia¬min, N-Phenyl-N'-cyclohexyl-p-phenylendiamin oder Mischungen von zwei oder mehreren davon.

Als sterisch gehinderte Phenole eignen sich prinzipiell alle Verbindungen mit phenolischer Struktur, die am phenolischen Ring mindestens eine sterisch anspruchsvolle Gruppe aufweisen. Bevorzugte Beispiele für erfindungsgemäss einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3 -methyl-6-tert. -butylphenol), Triethylenglykol-3 -(3 -tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritol¬diphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis¬(2,4-di-tert-butylphenyl)-4,4'-biphenylendiphospho¬nit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl- 12-methyl-dibenz[d,g]-1,3,2-dioxaphosphocin, Bis(2,4-di-tert- butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Hostanox® PAR24: Handelsprodukt der Firma Clariant, Basel).

Eine bevorzugte Ausführungsform des Wärmestabilisators besteht in der Kombination von organischen Hitzestabilisatoren, insbesondere in der Kombination von org. Stabilisatoren auf Basis eines Phenols, eines Phosphonits und eines HALS-Stabilisators, wie z.B. Hostanox O 3P, Sandosab P-EPQ und Hostavin N 30 P oder in der Kombination von org. Hitzestabilisatoren (insbesondere Hostanox PAR 24 und Irganox 1010), einem Bisphenol A basiertem Epoxid (insbesondere Epikote 1001) und einer Kupferstabilisierung auf Basis von CuI und KI. Eine kommerziell erhältliche Stabilisatormischung, bestehend aus organischen Stabilisatoren und Epoxiden ist beispielsweise Irgatec NC66 von BASF.

Insbesondere bevorzugt wird eine Wärmestabilisierung ausschliesslich auf Basis von CuI und KI und die Formmassen sind bevorzugt frei von Nigrosin.

Die Additive der Komponente (C) enthalten mit anderen Worten vorzugsweise wenigstens einem Stabilisator in Form eines Kupferhalogenids oder eine Mischung eines Kupferhalogenids mit einem Kaliumhalogenid, vorzugsweise eine Mischung aus CuI und KI wobei vorzugsweise in der Mischung Letzteres in 4-20 fachem molarem Überschuss vorliegt, und wobei vorzugsweise der Anteil des Stabilisators auf Basis des Kupfershalogenids, gegebenenfalls zusammen mit einem Kaliumhalogenid, im Bereich von 0.01-0.10 Gewichtsprozent vorzugsweise im Bereich von 0.03-0.07 Gewichtsprozent liegt, jeweils bezogen auf die 100 Gewichtsprozent der gesamten Polyamidformmasse (A)-(C).

Als weitere Komponenten (C) können die erfindungsgemässen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z.B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole, Triazine, Hindered Amine Light-Stabilizers (HALS) und Benzophenone genannt.

Es können anorganische Pigmente, wie Titandioxid, Ultramarinblau, Eisenoxid und Russ und/oder Grafit, weiterhin organische Pigmente, wie Phthalocyanine, Chinacridone, Perylene sowie Farbstoffe, wie Anthrachinone als Farbmittel zugesetzt werden.

Eine bevorzugte Ausführungsform der vorliegenden Erfindung betrifft eine thermoplastische Polyamid-Formmasse, enthaltend oder bestehend aus den folgenden Komponenten:
(A) 18 bis 39.9 Gew.-% wenigstens eines aliphatischen Polyamides ausgewählt aus der folgenden Gruppe: PA616, PA1016, PA12 oder Mischungen davon;
(B) 60 bis 82 Gew.-% wenigstens eines thermisch leitfähigen Metalloxids ausgewählt aus der folgenden Gruppe: Aluminiumoxid, Alumosilikat, Zinkoxid oder Mischungen davon;
(C) 0.1 bis 2.0 Gew.-% Additive;
wobei die Summe der Gewichtsprozente (A) bis (C) 100 % ergibt.

Die erfindungsgemässen thermoplastischen Formmassen zeichnen sich durch eine gute Fliessfähigkeit bei gleichzeitig sehr guter Mechanik, sowie einer guten Wärmeleitfähigkeit aus.

Sie eignen sich zur Herstellung von Folien und Formkörpern jeglicher Art. Nachfolgend sind einige bevorzugte Beispiele genannt:
Die beschriebenen Formmassen eignen sich, um Wärme von Wärmequellen besser abzuführen.

Bei der abgeführten Wärme kann es sich um Verlustleistung von elektrischen Baugruppen oder auch um absichtlich, durch Heizelemente erzeugte Wärme handeln.

Elektrische Baugruppen mit Verlustleistung enthalten z.B. CPUs, Widerstände, ICs, Batterien, Akkus, Motoren, Spulen, Relais, Dioden, Leiterbahnen, etc.

Um die Wärme abzuführen, muss ein möglichst guter Kontakt zwischen Wärmequelle und Formmasse hergestellt werden, so dass Wärme von der Quelle über die Formmasse an die Umgebung (gasförmig, flüssig, fest) abgegeben werden kann. Um die Qualität des Kontakts zu verbessern, können auch sogenannte Wärmeleitpasten eingesetzt werden. Am besten funktioniert der Wärmeabtransport, wenn die Wärmequelle mit den Formmassen umspritzt wird.

Daneben eignen sich die Formmassen auch für die Herstellung von Wärmetauschern. Wärmetauscher werden üblicherweise von einem heisseren Medium (gasförmig, flüssig) durchströmt, welches da bei über eine Wand Wärme an ein kühleres Medium (üblicherweise auch gasförmig oder flüssig) abgibt. Beispiele dafür sind Heizkörper im Wohnbereich oder Kühlwasserkühler im Automobil. Für die Eignung der beschriebenen Formmassen zur Herstellung von Wärmetauschern spielt es weder eine Rolle, ich welche Richtung Wärme transportiert wird, noch ist wichtig, ob heisses und/oder kühles Medium aktiv umgewälzt werden oder der freien Konvektion unterliegen. Allerdings wird in der Regel der Wärmeaustausch zwischen den beteiligten Medien durch aktives Umwälzen, unabhängig vom verwendeten Wandmaterial, verbessert.

Entsprechend betrifft die vorliegende Erfindung insbesondere auch Formkörper aus einer Polyamidformmasse wie oben dargelegt, vorzugsweise dadurch gekennzeichnet, dass es sich beim Formkörper um eine Folie, ein Strangprofil, ein Rohr, einen Behälter, ein Gehäuse oder ein Gehäusebestandteil, eine Abdeckung, eine elektronische oder elektrische Komponente, Ummantelung elektrischer Spulen, eine Dichtung, eine elektrische Isolation, einen Reflektor oder eine Halterung für ein Beleuchtungsmittel handelt. Besonders bevorzugt sind Wärmetauscher oder Wärmetauscher-Elemente. Die Formkörpers können als Mehrkomponenten-Körper ausgebildet sein, d. h. Bereiche aus der Polyamidformmasse wie oben dargelegt und andere Bereiche aus einer anderen Polyamidformmasse aufweisen. Zudem betrifft die vorliegende Erfindung die Verwendung einer thermoplastischen Formmasse wie oben dargelegt zur Herstellung eines solchen Formkörpers.

Weiterhin betrifft die vorliegende Erfindung Verfahren zur Herstellung solcher Formkörper, insbesondere dadurch gekennzeichnet, dass eine Polyamidformmasse wie oben dargelegt in einem Extrusionsverfahren, in einem Spritzgussverfahren oder in einem Beschichtungsverfahren verarbeitet wird.

Zu guter Letzt betrifft die vorliegende Erfindung ein Verfahren zur Herstellung einer Formmasse wie oben dargelegt, wobei das Verfahren bevorzugtermassen dadurch gekennzeichnet ist, dass die Komponente (A) aufgeschmolzen wird und danach mit der Komponente (B) sowie gegebenenfalls der Komponente (C) im schmelzflüssigen Zustand vermischt wird, vorzugsweise in einem Extruder, insbesondere bevorzugt in einem Schneckenextruder, wobei die Komponenten (B) und gegebenenfalls (C) über den Haupteinzug oder über einen Seiteneinzug zugeführt werden können, und wobei die Komponente (B) und/oder die Komponente (C) oder Teile davon in Form einer Masterbatch- oder Dryblend-Mischung zugeführt werden können.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Beispiele beschrieben, die lediglich zur Erläuterung dienen und nicht einschränkend auszulegen sind.

### Messmethoden

Im Rahmen dieser Anmeldung wurden die folgenden Messmethoden verwendet:

### Oberflächenrauheit, Ra, Rz:

Die Rauheit der Prüfkörper wurde gemäss der DIN EN ISO 4287 (2010-07) mit einem MarSurf XR1 Surface Measuring Station der Firma Mahr GmbH (DE) gemessen. Die Rauheitswerte, nämlich der arithmetischen Mittenrauwert Ra und die Rautiefe Rz, werden in Mikrometern (µm) angegeben. Gemessen wurde an einem UL-Stab 125x13x3.0 mm.

### Schmelzpunkt (Tm) und Schmelzenthalpie (ΔHm):

Der Schmelzpunkt und Schmelzenthalpie wurden nach ISO 11357-3 (2013) am Granulat bestimmt. Die DSC (Differential Scanning Calorimetry) Messungen wurden mit einer Aufheizrate von 20 K/min durchgeführt.

### Glasübergangstemperatur, Tg:

Die Bestimmung der Glasübergangstemperatur Tg erfolgte nach ISO 11357-2 (2013) an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (Tg) wurde bei der zweiten Aufheizung bestimmt. Der Mittelpunkt des Glasübergangbereichs, welcher als Glasübergangstemperatur angegeben wurde, wurde nach der Methode "Half Height" ermittelt.

### Relative Viskosität, ηᵣₑₗ:

Die relative Viskosität wurde gemäss ISO 307 (2007) bei 20°C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Zug E-Modul:

Die Bestimmung des Zug-E-Moduls wurde gemäss ISO 527 (2012) bei 23°C mit einer Zuggeschwindigkeit von 1 mm/min an einem ISO-Zugstab (Typ A1, Masse 170 x 20/10 x 4) hergestellt gemäss der Norm: ISO/CD 3167 (2003), durchgeführt.

### Bruchspannung und Bruchdehnung:

Die Bestimmung von Bruchspannung und Bruchdehnung wurden gemäss ISO 527 (2012) bei 23°C mit einer Zuggeschwindigkeit von 5 mm/min an einem ISO-Zugstab, Typ A1 (Masse 170 x 20/10 x 4 mm), hergestellt gemäss der Norm ISO/CD 3167 (2003), durchgeführt.

### Schlagzähigkeit nach Charpy:

Die Bestimmung der Schlagzähigkeit nach Charpy wurde gemäss ISO 179/2*eU (1997, * 2 = instrumentiert) bei 23°C an einem ISO-Prüfstab, Typ B1 (Masse 80 x 10 x 4 mm), hergestellt gemäss der Norm ISO/CD 3167 (2003), durchgeführt.

### Kerbschlagzähigkeit nach Charpy:

Die Bestimmung der Kerbschlagzähigkeit nach Charpy wurde gemäss ISO 179/2*eA (1997, *2 = instrumentiert) bei 23°C an einem ISO-Prüfstab, Typ B1 (Masse 80 x 10 x 4 mm), hergestellt gemäss der Norm ISO/CD 3167 (2003), durchgeführt.

### Wärmeleitfähigkeit iP, Wärmeleitfähigkeit tP:

Die Wärmeleitfähigkeit iP (ip = in plane, tP = through plane) wurde nach ISO 22007-4 (Version DE 04/2012) mit dem Gerät LFA 447 der Firma Netzsch (Laser Flash Methode) an UL94-Stäben der Dimension 125x13x3.0 mm bestimmt.

### Fliesslänge:

Die Fließlängen wurden mittels einer Arburg-Spritzgussmaschine (Typ: ARBURG - Allrounder 420 C 1000-250) bestimmt. Es wurden Fließspiralen der Dimension 1,5mm x 10 mm bei einer Massetemperatur von 290°C für Formmassen auf Basis Polyamid 1,2 und 5 sowie von 300 °C für Formmassen auf Basis Polyamid 3 und von 320°C für Polyamid 4 Formmassen und einer jeweiligen Formtemperatur von 100°C angefertigt.

### Ausgangsmaterialien

Die in den Beispielen und Vergleichsbeispielen verwendeten Materialien werden in Tabelle 1 zusammengefasst.

**Tabelle 1: In den Beispielen und Vergleichsbeispielen verwendete Materialien.**

| **Komponenten** | **Beschreibung** | **Hersteller** |
|---|---|---|
| Polyamid 1 | PA12, rel. Viskosität = 1,96, Tm = 178 °C | EMS-CHEMIE AG (Schweiz) |
| Polyamid 2 | PA616, Rel. Viskosität = 1.94, Tm = 195 °C | EMS-CHEMIE AG (Schweiz) |
| Polyamid 3 | PA66, VZ=125, Rel. Viskosität = 1,85 Tm = 260 °C | Radici (Italien) |
| Polyamid 4 | PA 10T/6T (85:15), Rel. Viskosität = 1,76, Tm = 295 °C | EMS-CHEMIE AG (Schweiz) |
| Polyamid 5 | PA612, Rel. Viskosität = 1,92, Tm = 215 °C | |
| Martoxid TM4220 | Aluminiumoxid, d50=2.5 µm, d100=40 µm, spez. Oberfläche BET=2.0 m²/g | Martinswerk (Deutschland) |
| Martoxid TM4250 | Aluminiumoxid, d50=1.6 µm, d100=20 µm, spez. Oberfläche BET=3.5 m²/g | Martinswerk (Deutschland) |
| Carbotherm PCTP30D | Bornitrid, d50=180 µm, d100=1600 µm, spez. Oberfläche BET=1 m²/g | Saint Gobain (USA) |
| Mikrotalk IT Extra | Magnesiumsilikat, d50=1.8 µm, d98=7 µm, d50=1.8 µm | Mondo Minerals (Niederlande) |
| Stabilisierung | Mischung aus Hostanox O 3P, Sandostab P-EPQ, Hostavin N 30 P, in einem Verhältnis von 2:1:2 | |

Hostanox O 3P ist ein Stabilisator auf Basis eines gehinderten Phenols mit der CAS-Nr. 32509-66-3, Sandosab P-EPQ ist ein Diphosphonit-Stabilisator (CAS: 119345-01-6) und, Hostavin N 30 P ist ein Stabilisator auf Basis eines gehinderten Amins (HALS) mit der CAS-Nr. 202483-55-4, alle erhältlich von Clariant.

### Beispiele und Vergleichsbeispiele

### Herstellung der Polyamid-Formmassen

Generell werden zur Herstellung der Kunststoff-Formmasse die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends zugeführt. Werden Zusatzstoffe (Additive) verwendet, können diese direkt oder in Form eines Masterbatches eingebracht werden. Bei einer Dryblend-Herstellung werden die getrockneten Polymer-Granulate und die Zusatzstoffe vermischt. Zur Vermeidung der Feuchtigkeitsaufnahme kann das Mischen unter getrocknetem Schutzgas erfolgen. Die eingesetzten wärmeleitfähigen Füllstoffe werden über einen Sidefeeder im beabsichtigten Verhältnis in die Polymerschmelze dosiert und im Zylinder der Compoundiermaschine weiter homogenisiert. Die Dosierungen aller Komponenten in den Einzug bzw. Sidefeeder werden so über elektronisch gesteuerte Waagen eingestellt, dass die gewünschten Mengenverhältnisse Additive - Polymer daraus resultieren.

Die Compoundierung erfolgt bei eingestellten Extruder-Zylindertemperaturen von z.B. 230 °C bis 300 °C. Vor der Düse kann Vakuum angelegt oder atmosphärisch entgast werden. Die Schmelze wird in Strangform in ein Wasserbad ausgetragen und granuliert. Bevorzugt wird zum Granulieren eine Unterwassergranulierung oder eine Stranggranulierung verwendet.

Die somit bevorzugt in Granulatform erhaltene Kunststoff-Formmasse wird anschliessend getrocknet und kann nachher durch Spritzguss zu Formkörpern weiterverarbeitet werden. Dies erfolgt über ein erneutes Aufschmelzen des trockenen Granulats in einem beheizbaren Zylinder, fördern der Schmelze in eine Spritzgussform, in der die Schmelze erstarren kann.

### Herstellung der Polyamid-Formmasse gemäss Beispiel B1 bis B8 und Vergleichsbeispiel VB1 bis VB7

Die Formmassen für die Beispiele B1 bis B8 sowie für die Vergleichsbeispiele VB1 bis VB7 wurden auf einem Zweiwellenextruder der Firma Werner & Pfleiderer Typ ZSK 25 hergestellt. Die Polyamide (A) sowie die Komponente (C) wurden in den in Tabelle 2 angegebenen Mengenanteilen über Dosierwaagen in den Einzug des Extruders dosiert. Die eingesetzten Füllstoffe (B) wurden über einen Sidefeeder (Zone 6) im beabsichtigten Verhältnis in die Polymerschmelze gefördert und im Zylinder der Compoundiermaschine weiter homogenisiert. Die Temperatur des ersten Gehäuses wurde auf 50 °C eingestellt, diejenige der restlichen Gehäuse aufsteigend von 250 bis 260 °C für Polyamid-1, -2 und -5, 270-290°C für Polyamid-3 und 270-320°C für Polyamid-4. Es wurde eine Drehzahl von 200 U/min und ein Durchsatz von 12 kg/h verwendet und in der dritten Zone vor der Düse im Stickstoffstrom entgast. Die als Strang ausgetragene Polyamid-Formmasse wurde im Wasserbad abgekühlt, granuliert und das erhaltene Granulat bei 90 °C im Vakuum bei 30 mbar auf einen Wassergehalt von unter 0.1 Gew.-% getrocknet.

### Herstellung der Prüfkörper

Aus dem erhaltenen Granulat wurden Zugstäbe, Schlagstäbe und Platten als Probekörper gespritzt, an denen die in Tabelle 2 angegebenen Eigenschaften bestimmt wurden. Die Prüfkörper wurden auf einer Spritzgussmaschine der Firma Arburg, Modell Allrounder 420 C 1000-250 hergestellt. Dabei wurden aufsteigende Zylindertemperaturen von 250 °C bis 270 °C für Polyamid-1, -2 und -5, 270-300°C für Polyamid-3 und 300-330°C für Polyamid-4 verwendet. Die Werkzeugtemperatur lag im Fall der UL94 Stäbe (125 × 13 x 3.0 mm) jeweils bei 80 °C. Bei den Zug- und Schlagstäben lag die Werkzeugtemperatur bei jeweils 80 °C. Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel gelagert.

Die folgende Tabelle 2 beschreibt die Beispiele gemäss der vorliegenden Erfindung und Vergleichsbeispiele.

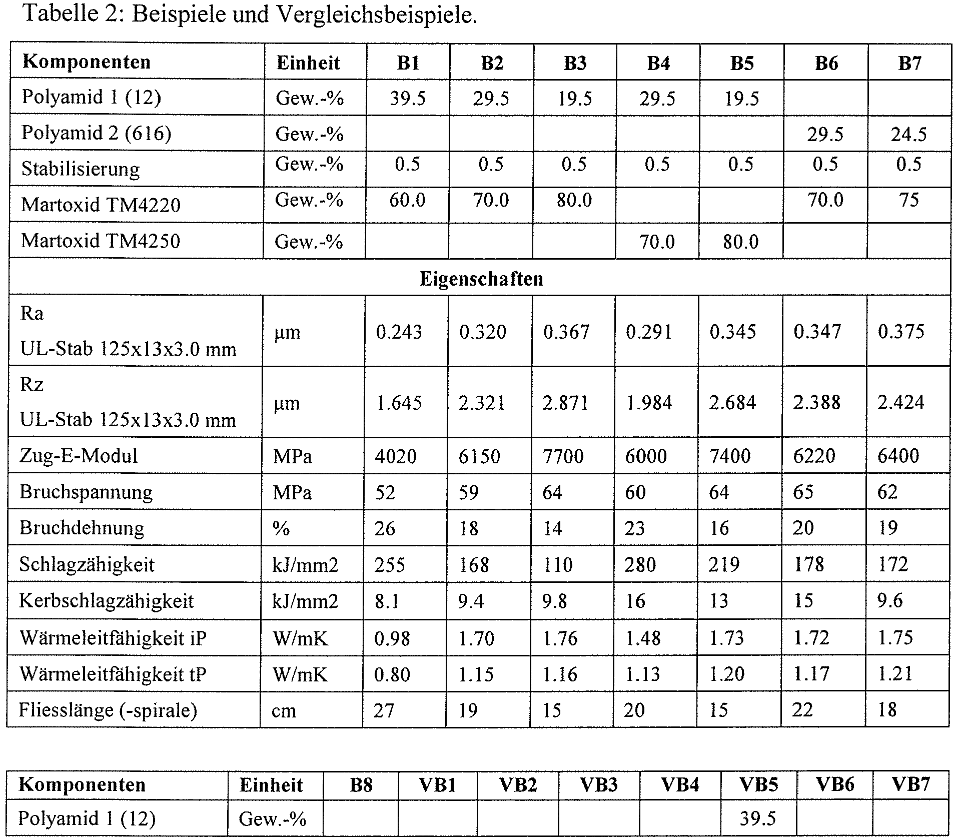

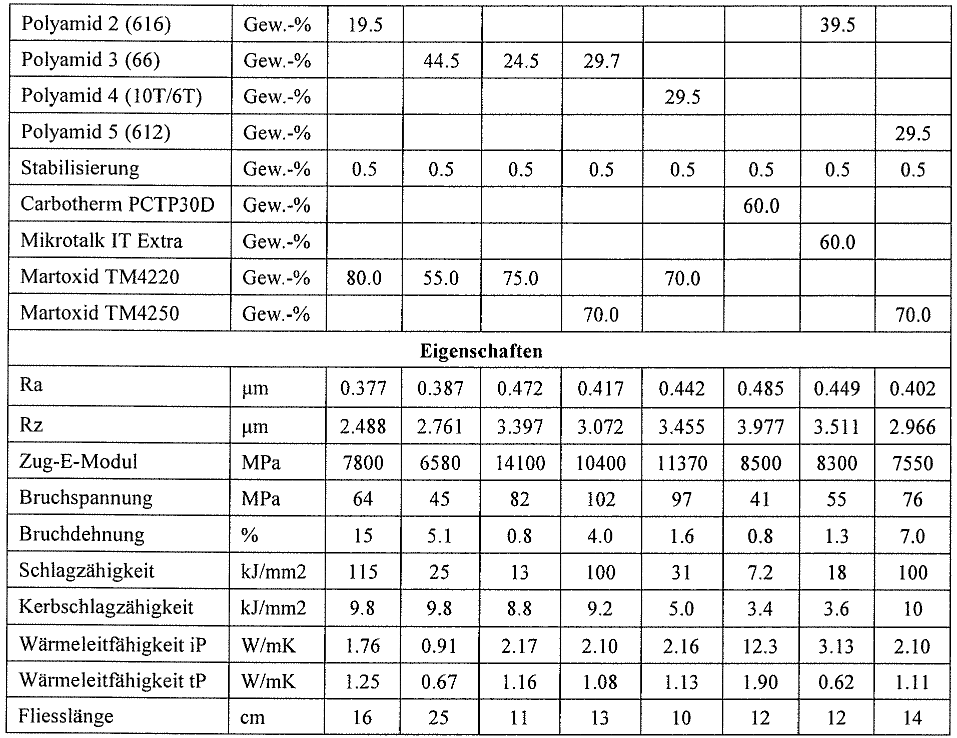

### Diskussion der Ergebnisse:

Die erfindungsgemässen Formmassen haben gute Wärmleitfähigkeiten bei gleichzeitig exzellenter Zähigkeit, insbesondere exzellenter Bruchdehnung und Schlagzähigkeit. Die Bruchdehnung der erfindungsgemässen Beispiele übersteigt deutlich diejenige der Vergleichsbeispiele (VB). Selbst bei 80% Füllgrad (80 Gew-% thermisch leitfähiges Additiv in der Formmasse) beträgt die Bruchdehnung immer noch 14 bis 16%, während die VBs sogar mit einem niedrigeren Füllgrad von nur 70% lediglich eine Bruchdehnung von maximal 7% aufweisen.

Vergleicht man die in den Beispielen erreichten Werte für die Schlagzähigkeit und die Kerbschlagzähigkeit, so haben die erfindungsgemässen Beispiele unerwartete und deutliche Vorteile gegenüber den VB. Bei einem Füllgrad von 70% ist die Schlagzähigkeit der erfindungsgemässen Beispiele im Mittel um den Faktor 2.7 und die Kerbschlagzähigkeit im Mittel um den Faktor 1.7 grösser als bei den VBs.

Das gleiche Bild ergibt sich für die Fliesslänge. Bei einem gleichem Füllgrad von 70% haben VB3, VB4 und VB7 eine Fliesslänge von 11, 13 und 14 cm, während B2, B4 und B6 Fliesslängen von 19, 20 und 22 cm erreichen.

Auch bezüglich der Oberflächenrauheit zeigen sich die erfindungsgemässen Beispiele überlegen. Es werden durchweg tiefere Ra- und Rz-Werte für die erfindungsgemässen Beispiele beobachtet.

## Patentansprüche

1. Thermoplastische Polyamid-Formmasse, enthaltend oder bestehend aus:
(A) 15 bis 45 Gew.-% wenigstens eines aliphatischen Polyamides mit einem C zu N-Verhältnis von mindestens 10;
(B) 55 bis 85 Gew.-% wenigstens eines thermisch leitfähigen Metalloxids ausgewählt aus der folgenden Gruppe: Aluminiumoxid, Magnesiumoxid, Zinkoxid, Alumosilikat, Zirkonoxid, oder Mischungen davon;
(C) 0 bis 5 Gew.-% Additive;
wobei die Summe der Gewichtsprozente (A) bis (C) 100 % ergibt.

2. Formmasse nach Anspruch 1, **dadurch gekennzeichnet, dass** der Anteil von Komponente (A) im Bereich von 18 bis 39.99 Gew.-% und bevorzugt im Bereich von 19 bis 35.9 Gew.-% und insbesondere im Bereich von 20-35 Gew.% oder 22 bis 32 Gew.-% liegt.

3. Formmasse nach Anspruch einem der vorhergehenden Ansprüche, **dadurch gekennzeichnet, dass** das mindestens eine aliphatische Polyamid der Komponente (A) ein C/N-Verhältnis von mindestens 10.5, oder im Bereich von 10 bis 12 und insbesondere bevorzugt im Bereich von 10.5 bis 11.5 aufweist;
und/oder
dass das aliphatische Polyamid der Komponente (A) ausgewählt ist aus folgender Gruppe: PA11, PA12, PA912, PA914, PA916, PA918, PA1010, PA1012, PA1212, PA1014, PA1016, PA1018, PA614, PA516, PA616, PA618 oder Mischungen davon, vorzugsweise ausgewählt aus der Gruppe: Polyamid 12, Polyamid 516, Polyamid 616 oder Mischungen davon.

4. Formmasse nach Anspruch einem der vorhergehenden Ansprüche, **dadurch gekennzeichnet, dass** das aliphatische Polyamid der Komponente (A) eine relative Viskosität (nach ISO 307 bei 20 °C 0.5 g in 100 ml m-Kresol) im Bereich von 1.5-2.4, vorzugsweise im Bereich von 1.6-2.1, insbesondere bevorzugt im Bereich von 1.65-1.95 aufweist
und/oder
dass das aliphatische Polyamid der Komponente (A) einen Schmelzpunkt im Bereich von 170-220 °C, vorzugsweise im Bereich von 175-210 °C aufweist.

5. Formmasse nach Anspruch einem der vorhergehenden Ansprüche, **dadurch gekennzeichnet, dass** der Anteil von Komponente (B) im Bereich von 60-82 Gew.-%, bevorzugt im Bereich von 64-81 Gew.-%, und insbesondere im Bereich von 65-80 Gew.-% oder 68-78 Gew.-% liegt.

6. Formmasse nach Anspruch einem der vorhergehenden Ansprüche, **dadurch gekennzeichnet, dass** das thermisch leitfähige Metalloxid der Komponente (B) ausgewählt ist als Aluminiumoxid, Zinkoxid, oder eine Mischung davon, insbesondere bevorzugt als α-Aluminiumoxid.

7. Formmasse nach Anspruch einem der vorhergehenden Ansprüche, **dadurch gekennzeichnet, dass** das thermisch leitfähige Metalloxid der Komponente (B) eine mittlere Teilchengrösse (Median, d50) im Bereich von 0.2-40 µm oder 0.2 - 25 µm oder 0.5-20 µm, vorzugsweise im Bereich von 1-5 µm, insbesondere bevorzugt im Bereich von 1.5-3 µm aufweist;
und/oder
dass das thermisch leitfähige Metalloxid der Komponente (B) eine Teilchengrössenverteilung aufweist, sodass d100 höchstens 1000 µm, vorzugsweise höchstens 100 µm oder höchstens 60 µm, insbesondere vorzugsweise höchstens 50 µm beträgt;
und/oder
dass das thermisch leitfähige Metalloxid der Komponente (B) eine spezifische Oberfläche (BET) im Bereich von 0.1-10 m²/g, vorzugsweise im Bereich von 0.5-7 m²/g, insbesondere vorzugsweise im Bereich von 1.5-4 m²/g aufweist; und/oder
dass das thermisch leitfähige Metalloxid der Komponente (B) eine Oberflächenbeschichtung aufweist, vorzugsweise ausgewählt als Oberflächenbeschichtung auf Basis von Fettsäuren, Silanen, wasserlöslichen Polyamiden, organischen Titanaten, organischen Zirkonaten, oder Kombinationen davon wobei die Silane bevorzugtermassen ausgewählt sind als Alkylsilane, Aminosilane, Vinylsilane, Epoxysilane;

8. Formmasse nach einem der vorhergehenden Ansprüche, **dadurch gekennzeichnet, dass** der Anteil von Komponente (C) im Bereich von 0.01-3 Gew.-%, vorzugsweise im Bereich von 0.1-2.0 Gew.-%, und insbesondere bevorzugt im Bereich von 0.2-1.5 Gew.-% liegt.

9. Formmasse nach einem der vorhergehenden Ansprüche, **dadurch gekennzeichnet, dass** die Additive der Komponente (C) ausgewählt sind aus der folgenden Gruppe:
Verarbeitungshilfsmittel, Schmiermittel, Stabilisatoren, Pigmente, Farbstoffe, Gleitmittel, Entformungsmittel, Weichmacher, Keimbildungsmittel, Oxidationsverzögerer, UV-Stabilisatoren oder eine Mischung davon;
und/oder
dass die Additive der Komponente (C) wenigstens ein Schmiermittel umfassen, ausgewählt als Aluminium, Alkali oder Erdalkali Salze oder Ester oder Amide von Fettsäuren, vorzugsweise mit 10-44 Kohlenstoffatomen, oder Mischungen davon;
und/oder
dass die Additive der Komponente (C) wenigstens einen Wärmestabilisator umfassen, ausgewählt aus Verbindungen des ein- oder zweiwertigen Kupfers, Stabilisatoren auf Basis sekundärer aromatischer Amine, Stabilisatoren auf Basis sterisch gehinderter Phenole, Phosphite/Phosphonite, oder Mischungen davon.

10. Formmasse nach einem der vorhergehenden Ansprüche, **dadurch gekennzeichnet, dass** die Additive der Komponente (C) wenigstens einem Stabilisator in Form eines Kupferhalogenids umfassen oder eine Mischung eines Kupferhalogenids mit einem Kaliumhalogenid, vorzugsweise eine Mischung aus CuI und KI wobei vorzugsweise in der Mischung Letzteres in 4-20 fachem molarem Überschuss vorliegt, und wobei vorzugsweise der Anteil des Stabilisators auf Basis des Kupfershalogenids, gegebenenfalls zusammen mit einem Kaliumhalogenid, im Bereich von 0.01-0.10 Gewichtsprozent vorzugsweise im Bereich von 0.03-0.07 Gewichtsprozent liegt, jeweils bezogen auf die 100 Gewichtsprozent der gesamten Polyamidformmasse (A)-(C).

11. Formmasse nach einem der vorhergehenden Ansprüche, enthaltend oder bestehend aus
(A) 18 bis 39.9 Gew.-% wenigstens eines aliphatischen Polyamides ausgewählt aus der folgenden Gruppe: PA616, PA1016, PA12 oder Mischungen davon, vorzugsweise PA616 allein;
(B) 60 bis 82 Gew.-% wenigstens eines thermisch leitfähigen Metalloxids ausgewählt aus der folgenden Gruppe: Aluminiumoxid, Alumosilikat, Zinkoxid oder Mischungen davon, vorzugsweise Aluminiumoxid;
(C) 0.1 bis 2.0 Gew.-% Additive;
wobei die Summe der Gewichtsprozente (A) bis (C) 100 % ergibt.

12. Formkörper aus einer Polyamidformmasse nach einem der vorhergehenden Ansprüche, vorzugsweise **dadurch gekennzeichnet, dass** es sich beim Formkörper um eine Folie, ein Strangprofil, ein Rohr, einen Behälter, ein Gehäuse oder ein Gehäusebestandteil, eine Abdeckung, eine elektronische oder elektrische Komponente, eine Dichtung, eine elektrische Isolation, einen Reflektor oder eine Halterung für ein Beleuchtungsmittel handelt.

13. Verwendung einer thermoplastischen Formmasse nach einem der vorhergehenden Ansprüche 1-11 zur Herstellung eines Formkörpers nach Anspruch 12.

14. Verfahren zur Herstellung eines Formkörpers nach Anspruch 12, **dadurch gekennzeichnet, dass** eine Polyamidformmasse nach einem der Ansprüche 1-11 in einem Extrusionsverfahren, in einem Spritzgussverfahren oder in einem Beschichtungsverfahren verarbeitet wird.

15. Verfahren zur Herstellung einer Formmasse nach einem der Ansprüche 1-11, **dadurch gekennzeichnet, dass** die Komponente (A) aufgeschmolzen wird und danach mit der Komponente (B) sowie gegebenenfalls der Komponente (C) im schmelzflüssigen Zustand vermischt wird, vorzugsweise in einem Extruder, insbesondere bevorzugt in einem Schneckenextruder, wobei die Komponenten (B) und gegebenenfalls (C) über den Haupteinzug oder über einen Seiteneinzug zugeführt werden können, und wobei die Komponente (B) und/oder die Komponente (C) oder Teile davon in Form einer Masterbatch- oder Dryblend-Mischung zugeführt werden können.

## Claims

1. Thermoplastic polyamide moulding composition containing or consisting of:
(A) 15 to 45% by weight of at least one aliphatic polyamide having a C to N ratio of at least 10;
(B) 55 to 85% by weight of at least one thermally conductive metal oxide selected from the group consisting of alumina, magnesium oxide, zinc oxide, aluminosilicate, zirconia, or mixtures thereof;
(C) 0 to 5% by weight of additives;
wherein the sum of the percentages by weight of (A) to (C) is 100%.

2. Moulding composition according to claim 1, **characterised in that** the proportion of component (A) is in the range from 18 to 39.99 wt.% and preferably in the range from 19 to 35.9 wt.% and in particular in the range from 20-35 wt.% or 22 to 32 wt.%.

3. Moulding composition according to one of the preceding claims, **characterized in that** the at least one aliphatic polyamide of component (A) has a C/N ratio of at least 10.5, or in the range from 10 to 12 and in particular preferably in the range from 10.5 to 11.5;
and/or
**in that** the aliphatic polyamide of component (A) is selected from the following group: PA11, PA12, PA912, PA914, PA916, PA918, PA1010, PA1012, PA1212, PA1014, PA1016, PA1018, PA614, PA516, PA616, PA618 or mixtures thereof, preferably selected from the group: polyamide 12, polyamide 516, polyamide 616 or mixtures thereof.

4. A molding composition according to one of the preceding claims, **characterized in that** the aliphatic polyamide of component (A) has a relative viscosity (according to ISO 307 at 20°C 0.5 g in 100 ml m-cresol) in the range of 1.5-2.4, preferably in the range of 1.6-2.1, in particular preferably in the range of 1.65-1.95, according to ISO 307 0.5 g in 100 ml m-cresol.
and/or
**in that** the aliphatic polyamide of component (A) has a melting point in the range from 170-220°C, preferably in the range from 175-210°C.

5. Moulding composition according to one of the preceding claims, **characterized in that** the proportion of component (B) is in the range of 60-82 wt.%, preferably in the range of 64-81 wt.%, and in particular in the range of 65-80 wt.% or 68-78 wt.%.

6. Moulding composition according to one of the preceding claims, **characterized in that** the thermally conductive metal oxide of component (B) is selected as alumina, zinc oxide, or a mixture thereof, in particular preferably as α alumina.

7. Moulding composition according to one of the preceding claims, **characterized in that** the thermally conductive metal oxide of component (B) has an average particle size (median, d50) in the range 0.2-40 µm or 0.2-25 µm or 0.5-20 µm, preferably in the range 1-5 µm, preferably in the range 1.5-3 µm;
and/or
**in that** the thermally conductive metal oxide of component (B) has a particle size distribution such that d100 is at most 1000 µm, preferably at most 100 µm, or at most 60 µm, preferably at most 50 µm;
and/or
**in that** the thermally conductive metal oxide of component (B) has a specific surface area (BET) in the range from 0.1-10 m2/g, preferably in the range from 0.5-7 m2/g, in particular preferably in the range from 1.5-4 m2/g;
and/or
**in that** the thermally conductive metal oxide of component (B) has a surface coating, preferably selected as a surface coating based on fatty acids, silanes, water-soluble polyamides, organic titanates, organic zirconates, or combinations thereof, the silanes being preferably selected as alkylsilanes, aminosilanes, vinylsilanes, epoxysilanes.

8. Moulding composition according to one of the preceding claims, **characterized in that** the proportion of component (C) is in the range from 0.01-3 wt.%, preferably in the range from 0.1-2.0 wt.%, and in particular preferably in the range from 0.2-1.5 wt.%.

9. A molding composition according to one of the preceding claims, **characterized in that** the additives of component (C) are selected from the following group: processing aids, lubricants, stabilizers, pigments, dyes, lubricants, release agents, plasticizers, nucleating agents, oxidation retardants, UV stabilizers or a mixture thereof;
and/or
**in that** the additives of component (C) comprise at least one lubricant selected as aluminium, alkali or alkaline earth salts or esters or amides of fatty acids, preferably having 10-44 carbon atoms, or mixtures thereof;
and/or
**in that** the additives of component (C) comprise at least one heat stabilizer selected from compounds of monovalent or divalent copper, stabilizers based on secondary aromatic amines, stabilizers based on sterically hindered phenols, phosphite/phosphonites, or mixtures thereof.

10. Moulding composition according to one of the preceding claims, **characterized in that** the additives of component (C) comprise at least one stabilizer in the form of a copper halide or a mixture of a copper halide with a potassium halide, preferably a mixture of CuI and KI, the latter preferably being present in 4-20 times molar excess in the mixture, and preferably the proportion of the stabilizer based on the copper halide, optionally together with a potassium halide, being in the range 0.01-0.10% by weight, preferably in the range of 0.03-0.07% by weight, based in each case on the 100% by weight of the total polyamide moulding composition (A)-(C).

11. Moulding composition according to one of the preceding claims, containing or consisting of
(A) 18 to 39.9% by weight of at least one aliphatic polyamide selected from the following group: PA616, PA1016, PA12 or mixtures thereof, preferably PA616 alone;
(B) 60 to 82% by weight of at least one thermally conductive metal oxide selected from the following group: alumina, aluminosilicate, zinc oxide or mixtures thereof, preferably alumina;
(C) 0.1 to 2.0% by weight of additives;
the sum of the percentages by weight of (A) to (C) being 100%.

12. Moulded article made from a polyamide moulding compound according to one of the preceding claims, preferably **characterised in that** the moulded article is a foil, an extruded profile, a tube, a container, a housing or a housing component, a cover, an electronic or electrical component, a seal, electrical insulation, a reflector or a holder for a lighting means.

13. Use of a thermoplastic moulding composition according to any of the preceding claims 1-11 for the manufacture of a moulded article according to claim 12.

14. Process for the production of a moulded article according to claim 12, **characterised in that** a polyamide moulding composition according to one of claims 1-11 is processed in an extrusion process, in an injection moulding process or in a coating process.

15. Process for producing a moulding composition according to one of claims 1-11, **characterised in that** the component (A) is melted and then mixed with the component (B) and optionally the component (C) in the molten state, preferably in an extruder, in particular preferably in a screw extruder, wherein the components (B) and optionally (C) can be supplied via the main feed or via a side feed, and wherein the component (B) and/or the component (C) or parts thereof can be supplied in the form of a masterbatch or dryblend mixture.

## Revendications

1. Matériau de moulage à base de polyamide thermoplastique, contenant ou consistant en :
(A) 15 à 45 % en poids d'au moins un polyamide aliphatique ayant un rapport C sur N d'au moins 10 ;
(B) 55 à 85 % en poids d'au moins un oxyde métallique thermiquement conducteur choisi dans le groupe suivant : l'oxyde d'aluminium, l'oxyde de magnésium, l'oxyde de zinc, l'alumosilicate, l'oxyde de zirconium ou des mélanges de ceux-ci ;
(C) 0 à 5 % en poids d'additifs ;
la somme des pourcentages en poids de (A) à (C) étant de 100 %.

2. Matériau de moulage selon la revendication 1, **caractérisé en ce que** la proportion du composant (A) se situe dans la plage allant de 18 à 39,99 % en poids, et de préférence dans la plage allant de 19 à 35,9 % en poids, et notamment dans la plage allant de 20 à 35 % en poids ou de 22 à 32 % en poids.

3. Matériau de moulage selon la revendication l'une quelconque des revendications précédentes, **caractérisé en ce que** ledit au moins un polyamide aliphatique du composant (A) présente un rapport C/N d'au moins 10,5, ou dans la plage allant de 10 à 12, et de manière particulièrement préférée dans la plage allant de 10,5 à 11,5 ;
et/ou
**en ce que** le polyamide aliphatique du composant (A) est choisi dans le groupe suivant : PA11, PA12, PA912, PA914, PA916, PA918, PA1010, PA1012, PA1212, PA1014, PA1016, PA1018, PA614, PA516, PA616, PA618 ou des mélanges de ceux-ci, de préférence choisi dans le groupe suivant : le polyamide 12, le polyamide 516, le polyamide 616 ou des mélanges de ceux-ci.

4. Matériau de moulage selon la revendication l'une quelconque des revendications précédentes, **caractérisé en ce que** le polyamide aliphatique du composant (A) présente une viscosité relative (selon ISO 307 à 20 °C, 0,5 g dans 100 ml de m-crésol) dans la plage allant de 1,5 à 2,4, de préférence dans la plage allant de 1,6 à 2,1, de manière particulièrement préférée dans la plage allant de 1,65 à 1,95 ;
et/ou
**en ce que** le polyamide aliphatique du composant (A) présente un point de fusion dans la plage allant de 170 à 220 °C, de préférence dans la plage allant de 175 à 210 °C.

5. Matériau de moulage selon la revendication l'une quelconque des revendications précédentes, **caractérisé en ce que** la proportion du composant (B) se situe dans la plage allant de 60 à 82 % en poids, de préférence dans la plage allant de 64 à 81 % en poids, et notamment dans la plage allant de 65 à 80 % en poids, ou de 68 à 78 % en poids.

6. Matériau de moulage selon la revendication l'une quelconque des revendications précédentes, **caractérisé en ce que** l'oxyde métallique thermiquement conducteur du composant (B) est choisi parmi l'oxyde d'aluminium, l'oxyde de zinc ou un mélange de ceux-ci, de manière particulièrement préférée sous la forme d'oxyde d'aluminium α.

7. Matériau de moulage selon la revendication l'une quelconque des revendications précédentes, **caractérisé en ce que** l'oxyde métallique thermiquement conducteur du composant (B) présente une taille de particule moyenne (médiane, d50) dans la plage allant de 0,2 à 40 µm ou de 0,2 à 25 µm ou de 0,5 à 20 µm, de préférence dans la plage allant de 1 à 5 µm, de manière particulièrement préférée dans la plage allant de 1,5 à 3 µm ;
et/ou
**en ce que** l'oxyde métallique thermiquement conducteur du composant (B) présente une distribution des tailles de particules telle que d100 est d'au plus 1 000 µm, de préférence d'au plus 100 µm ou d'au plus 60 µm, de manière particulièrement préférée d'au plus 50 µm ;
et/ou
**en ce que** l'oxyde métallique thermiquement conducteur du composant (B) présente une surface spécifique (BET) dans la plage allant de 0,1 à 10 m²/g, de préférence dans la plage allant de 0,5 à 7 m²/g, de manière particulièrement préférée dans la plage allant de 1,5 à 4 m²/g ;
et/ou
**en ce que** l'oxyde métallique thermiquement conducteur du composant (B) présente un revêtement de surface, de préférence choisi sous la forme d'un revêtement de surface à base d'acides gras, de silanes, de polyamides solubles dans l'eau, de titanates organiques, de zirconates organiques ou de combinaisons de ceux-ci, les silanes étant de manière davantage préférée choisis sous la forme d'alkylsilanes, d'aminosilanes, de vinylsilanes, d'époxysilanes.

8. Matériau de moulage selon l'une quelconque des revendications précédentes, **caractérisé en ce que** la proportion du composant (C) se situe dans la plage allant de 0,01 à 3 % en poids, de préférence dans la plage allant de 0,1 à 2,0 % en poids, et de manière particulièrement préférée dans la plage allant de 0,2 à 1,5 % en poids.

9. Matériau de moulage selon l'une quelconque des revendications précédentes, **caractérisé en ce que** les additifs du composant (C) sont choisis dans le groupe suivant : les adjuvants d'usinage, les lubrifiants, les stabilisateurs, les pigments, les colorants, les agents glissants, les agents de démoulage, les plastifiants, les agents de nucléation, les retardateurs d'oxydation, les stabilisateurs UV ou un mélange de ceux-ci ;
et/ou
**en ce que** les additifs du composant (C) comprennent au moins un lubrifiant, choisi sous la forme d'aluminium, de sels alcalins ou alcalino-terreux ou d'esters ou d'amides d'acides gras, de préférence contenant 10 à 44 atomes de carbone, ou de mélanges de ceux-ci ;
et/ou
**en ce que** les additifs du composant (C) comprennent au moins un stabilisateur thermique, choisi parmi les composés de cuivre mono- ou bivalent, les stabilisateurs à base d'amines aromatiques secondaires, les stabilisateurs à base de phénols à encombrement stérique, les phosphites/phosphonites, ou les mélanges de ceux-ci.

10. Matériau de moulage selon l'une quelconque des revendications précédentes, **caractérisé en ce que** les additifs du composant (C) comprennent au moins un stabilisateur sous la forme d'un halogénure de cuivre, ou un mélange d'un halogénure de cuivre avec un halogénure de potassium, de préférence un mélange de CuI et KI, ce dernier étant de préférence présent dans le mélange en un excès molaire d'un facteur de 4 à 20, et la proportion du stabilisateur à base de l'halogénure de cuivre, éventuellement conjointement avec un halogénure de potassium, se situant de préférence dans la plage allant de 0,01 à 0,10 pour cent en poids, de préférence dans la plage allant de 0,03 à 0,07 pour cent en poids, à chaque fois par rapport à 100 pour cent en poids de la masse de moulage à base de polyamide totale (A) à (C).

11. Matériau de moulage selon l'une quelconque des revendications précédentes, contenant ou constitué par :
(A) 18 à 39,9 % en poids d'au moins un polyamide aliphatique choisi dans le groupe suivant : PA616, PA1016, PA12 ou des mélanges de ceux-ci, de préférence PA616 seul ;
(B) 60 à 82 % en poids d'au moins un oxyde métallique thermiquement conducteur choisi dans le groupe suivant : l'oxyde d'aluminium, l'alumosilicate, l'oxyde de zinc ou des mélanges de ceux-ci, de préférence l'oxyde d'aluminium ;
(C) 0,1 à 2,0 % en poids d'additifs ;
la somme des pourcentages en poids de (A) à (C) étant de 100 %.

12. Corps moulé en un matériau de moulage à base de polyamide selon l'une quelconque des revendications précédentes, de préférence **caractérisé en ce que** le corps moulé consiste en une feuille, un profilé extrudé, un tube, un contenant, un boîtier ou un constituant de boîtier, un couvercle, un composant électronique ou électrique, un joint d'étanchéité, une isolation électrique, un réflecteur ou un support pour un moyen d'éclairage.

13. Utilisation d'un matériau de moulage thermoplastique selon l'une quelconque des revendications 1 à 11 précédentes pour la fabrication d'un corps moulé selon la revendication 12.

14. Procédé de fabrication d'un corps moulé selon la revendication 12, **caractérisé en ce qu'**un matériau de moulage à base de polyamide selon l'une quelconque des revendications 1 à 11 est transformé dans un procédé d'extrusion, dans un procédé de moulage par injection ou dans un procédé de revêtement.

15. Procédé de fabrication d'un matériau de moulage selon l'une quelconque des revendications 1 à 11, **caractérisé en ce que** le composant (A) est fondu, puis mélangé avec le composant (B), ainsi qu'éventuellement le composant (C), à l'état liquide fondu, de préférence dans une extrudeuse, de manière particulièrement préférée dans une extrudeuse à vis, les composants (B) et éventuellement (C) pouvant être introduits par l'entrée principale ou par une entrée latérale, et le composant (B) et/ou le composant (C) ou des parties de ceux-ci pouvant être introduits sous la forme d'un mélange maître ou d'un mélange à sec.
